# EUROPÄISCHE PATENTSCHRIFT

(11) **EP 1 625 187 B1**
(45) Veröffentlichungstag und Bekanntmachung des Hinweises auf die Patenterteilung: **28.02.2007**
(21) Anmeldenummer: 04731891.0
(22) Anmeldetag: 10.05.2004
(51) Int. Cl.: C09D 11/02, C09D 5/36

(54) **METALLIC-DRUCKFARBE UND DEREN VERWENDUNG ZUR VEREDELUNG VON DRUCKEN**
METALLIC INK, AND USE THEREOF FOR IMPROVING PRINTS
ENCRE D'IMPRIMERIE METALLIQUE ET SON UTILISATION POUR L'AMELIORATION DE DOCUMENTS IMPRIMES

(30) Priorität: 21.05.2003 DE 10323374
(43) Veröffentlichungstag der Anmeldung: 15.02.2006
(73) Patentinhaber: Flint Group Germany GmbH, 70469 Stuttgart (DE); Merck Patent GmbH, 64293 Darmstadt (DE)
(72) Erfinder: KURZE, Ulrich, 76891 Busenberg (DE); SCHLICHTING, Peter, 68199 Mannheim (DE); LEUSCHNER, Thomas, 71032 Böblingen (DE); BAZ, Uwe, 74321 Bietigheim-Bissingen (DE); KRIETSCH, Burkhard, 64807 Dieburg (DE)
(74) Vertreter: Isenbruck, Günter
(86) Internationale Anmeldenummer: PCT/EP2004/004961
(87) Internationale Veröffentlichungsnummer: WO 2004/104120

(56) Entgegenhaltungen:
- EP-A- 0 523 567
- EP-A- 0 803 552
- EP-A- 0 960 915
- DE-A- 19 516 181
- US-A- 5 445 671

## Beschreibung

Vorliegende Erfindung betrifft flüssige oder pastöse Metallic-Druckfarben, welche ein Gemisch mindestens eines Metalleffektpigmentes sowie mindestens eines teilweise lichtdurchlässigen Effektpigmentes enthalten. Sie betrifft weiterhin deren Verwendung zum Veredeln von Drucken sowie ein Verfahren zum Veredeln von Drucken.

Bei so genannten mechanischen Druckverfahren wie Offsetdruck, Hochdruck, Flexodruck, Tiefdruck oder Siebdruck wird die Druckfarbe durch Kontakt einer mit Druckfarbe versehenen Druckplatte oder Druckform mit dem Bedruckstoff auf diesen übertragen. Druckfarben für diese Druckprozesse umfassen üblicherweise Lösemittel, Farbmittel, Bindemittel sowie ggf. verschiedene Additive. Druckfarben für mechanische Druckverfahren umfassen pastöse Druckfarben mit hoher Viskosität und hochsiedenden Lösemitteln insbesondere für den Offset- und Buchdruck sowie Flüssigdruckfarben mit vergleichsweise niedriger Viskosität und niedrigsiedenden Lösemitteln insbesondere für den Flexo-, Tief- oder Siebdruck. Weitere Einzelheiten sind beispielsweise offenbart in "Printing Inks" - Ullmann's Encyclopedia of Industrial Chemistry, Sixth Edition, 1999 Electronic Release.

Es ist eine bekannte Technik, Drucke mittels Gold-, Silber- oder Kupferbronzen zu veredeln. Diese Technik wird beispielsweise beim Druck von hochwertigen Verpackungen, Prospekten oder Etiketten eingesetzt. Bei der klassischen Bronzierung wird das Etikett oder die Verpackung zunächst auf übliche Art und Weise, beispielsweise mittels Offset- oder Flexo-Mehrtarbdruck erstellt. Hierauf wird in einem weiteren Arbeitsgang auf die Stellen des Druckes, die später Metallic-Effekte aufweisen sollen, eine spezielle Unterdruckfarbe aufgetragen, welche eine sehr starke Klebewirkung aufweist. In einer Bronziermaschine wird dann ein Bronzepuder, beispielsweise aus Gold-, Silber, Kupferbronzen oder auch anderen Effektpigmenten aufgetragen, wobei der Puder auf den mit der Unterdruckfarbe bedruckten Bereichen haften bleibt und dem Druckwerk den typischen Metallic-Effekt verleiht. Die Bronziermaschine gliedert sich in einem Bronzier- und in einen Abstaubteil. Im Bronzierteil dieser Maschine wird mit Plüsch überzogenen Auftragswalzen das Papier mit Bronzepulver eingestaubt, durch die Wischer anschließend bronziert und durch die nachfolgenden Bänder überschüssiges Bronzepulver wieder abgestaubt. Zum Schluss fahren die bronzierten Bögen in eine Stapelauslage. Gegebenenfalls muss der gesamte Druck in einem weiteren Arbeitsgang noch überlackiert werden, um die Scheuerfestigkeit der Bronzeschicht zu erhöhen. Weitere Einzelheiten zur klassischen Bronzierung sind beispielsweise in "Offsetdruck" von Wolfgang Walenski, Polygraph Verlag Frankfurt am Main 1991, Kapitel 29, Gold und Silberdruck S. 204 ff. oder Römpp Lexikon Lacke und Druckfarben, Thieme Verlag 1998, Metalldruckfarben, S 376 ff. dargestellt.

Die klassische Bronzierung ist jedoch sehr aufwändig. Es sind mindestens 3 Produktionsschritte erforderlich. Da auch nicht jede Druckerei über die entsprechenden Einrichtungen zum Bronzieren verfügt, entstehen gegebenenfalls noch zusätzliche Transportkosten für den Transport zu einem Lohnveredler, der die Bronzierung vornimmt und zurück. Weiterhin verursacht das Hantieren mit Bronzepulvern eine erhebliche Staubbelastung, so dass Absauganlagen erforderlich sind. Die klassische Bronzierung ist dementsprechend teuer sowie sehr zeitaufwändig.

Die klassische Bronzierung ergibt Metallic-Schichten mit guter Qualität, welche unabhängig vom Betrachtungswinkel Glitzer-Effekte aufweisen. Allerdings sind die Kanten der Motive unscharf ausgebildet, so dass insbesondere feine Motive mittels der klassischen Bronzierung nicht in zufriedenstellender Qualität hergestellt werden können.

Außerdem muss sich der Drucker bei der klassischen Bronzierung mit einer Reihe weiterer Probleme auseinander setzen. So lassen sich die zu bronzierenden Bogen häufig nur schlecht und ungleichmäßig einstauben, oder in der Bronziermaschine zerreißen oder knicken die Bogen oder die Ecken schlagen um. Zu weiteren Problemen aus der Praxis gehören schlechte Haftung der Bronze, Trocknungsprobleme der Unterdruckfarbe, Oxidations- und Korrosionserscheinungen und schlechtes Abstauben der Bronze.

Als Alternative zur klassischen Bronzierung ist es bekannt, Metalldruckfarben einzusetzen, welche Metalleffektpigmente enthalten, und die im wesentlichen wie übliche Druckfarben verdruckbar sind. Einzelheiten sind beispielsweise im Römpp-Lexikon "Lacke und Druckfarben", Thieme-Verlag, Stuttgart, 1998 offenbart. Beispielsweise kann es sich um Flexodruckfarben handeln. Derartige Metallic-Flexodruckfarben enthalten üblicherweise bis zu 40 Gew.-% Metalleffektpigmente. Buchdruck- oder Offsetdruckfarben sind niedriger pigmentiert und enthalten üblicherweise bis zu 25 Gew. -% Metalleffektpigmente. Die bekannten Druckfarben liefern jedoch technisch schlechtere Metallic-Schichten. Während bei der klassischen Bronzierung der Metallic-Glitzereffekt weitgehend unabhängig vom Betrachtungswinkel ist, tritt dieser Effekt beim Druck mit Metalldruckfarben nur bei bestimmten Winkeln auf, während bei anderen Winkeln kein Glitzern zu beobachten ist.

Trotz dieses eindeutigen technischen Nachteils, werden heutzutage viele Aufträge aus Kostengründen nicht auf klassische Art und Weise bronziert, sondern mit Metallic-Druckfarben gedruckt. Die Qualitätseinbußen im Vergleich zur Bronzierung werden bewusst in Kauf genommen, weil der Markt den zusätzlichen Preisaufschlag einer klassischen Bronzierung nicht bezahlt.

US 4,221,593 offenbart eine goldfarbene Druckfarbe, welche bis zu 52 bis 60 Gew.-% Metalleffektpigment enthalten kann. Es ist jedoch ein sehr spezielles organisches Bindemittelsystem aus Phenol- und Xylolharzen sowie Gele bildenden Komponenten wie Aluminium-Alkoholaten oder Chelaten, Aminen und Holzöl oder Petroleum als organischen Lösemitteln erforderlich. Wässrige Formulierungen sind nicht beschrieben. Ein derartig spezielles Bindemittelsystem erlaubt jedoch nur einen sehr begrenzten Anwendungsbereich. Es ist keine Anpassung an verschiedene Drucktechniken möglich; insbesondere kann die offenbarte Druckfarbe nicht mittels Flexodrucktechnik verdruckt werden.

EP-A 803 552 offenbart Perlglanzpigment-Zubereitungen, welche zur Herstellung von Druckfarben mit Perlglanzeffekt vorgesehen sind. Die Perlglanz-Pigmente können auch mit Mengen von bis zu 20 Gew.-% Metallpigmenten bzgl. des Perlglanzpigmentes abgemischt werden. Die Bronzierung von Drucken ist nicht offenbart.

WO 98/38253 offenbart Pigmentpräparationen aus Perlglanz- oder Metalleffektpigmenten sowie deren Verwendung zur Herstellung von Druckfarben. Die Schrift offenbart auch Pigmentpräparationen, bei denen Perlglanz- und Metalleffektpigmente im Verhältnis 10:1 und 1:1 miteinander gemischt werden. Einzelheiten zur Formulierung von Druckfarben sowie deren Verwendung zur Bronzierung sind nicht offenbart.

WO 98/13426 und WO 98/53010 offenbaren spezielle Perlglanzpigmente sowie deren Verwendung u.a. zur Herstellung von Druckfarben. Die Schriften erwähnen die Möglichkeit, die Perlglanzpigmente mit anderen Pigmenten, beispielsweise auch Metalleffektpigmenten, abzumischen. Einzelheiten zur Formulierung von Druckfarben sowie deren Verwendung zur Bronzierung sind nicht offenbart.

Aufgabe der vorliegenden Erfindung war es, Metallic-Druckfarben bereitzustellen, die auf einfache Art und Weise wie eine übliche Druckfarbe verdruckt werden können, und mit denen dennoch ein dem klassischen Bronzieren vergleichbarer Effekt, nämlich ein weitgehend vom Betrachtungswinkel unabhängiges Glitzern, erreicht werden kann. Es sollte sich sowohl um flüssige, beispielsweise mittels Tief-, Flexo- oder Siebdrucktechnik verdruckbare Druckfarben oder auch um pastöse, beispielsweise mittels Offset- oder Buchdrucktechnik verdruckbare Druckfarben handeln. Bei den Metallic-Druckfarben sollte es sich insbesondere auch um wässrige Flexo-, Tief- oder Siebdruckfarben handeln können. Aufgabe war es weiterhin, die Schärfe der Randbereiche im Vergleich zum klassischen Bronzieren zu verbessern, um auch feine Motive mit hoher Qualität wiedergeben zu können.

Dementsprechend wurden flüssige Metallic-Druckfarben für den Flexo-, Tief oder Siebdruck gefunden, welche mindestens ein Lösemittel oder Lösemittelgemisch, mindestens ein polymeres Bindemittel, mindestens zwei verschiedene Effektpigmente sowie optional weitere Zusatzstoffe umfassen, wobei es sich bei den Effektpigmenten um 20 bis 60 Gew.-% mindestens eines Metalleffektpigmentes sowie 20 bis 60 Gew.-% mindestens eines teilweise lichtdurchlässigen Effektpigmentes handelt, mit der Maßgabe, dass die Gesamtmenge aller Effektpigmente in der Druckfarbe 40 bis 80 Gew.-% beträgt, wobei die Mengen jeweils auf die Summe aller Bestandteile der Druckfarbe bezogen sind.

Erfindungsgemäß eingesetzte teilweise lichtdurchlässige Effektpigmente sind Perlglanzpigmente, bestehend aus transparenten oder semitransparenten plättchenförmigen Substraten, ausgewählt aus der Gruppe bestehend aus Glimmer, synthetischem Glimmer, Talkum, Kaolin und Glas, die mit farblosen oder farbigen Metalloxiden beschichtet sind, und/oder teilweise lichtdurchlässige Effektpigmente auf Basis von Flüssigkristallen.

In einem weiteren Aspekt der Erfindung wurden pastöse Metallic-Druckfarbe für den Offset- oder Buchdruck gefunden, welche mindestens ein Lösemittel oder Lösemittelgemisch, mindestens ein polymeres Bindemittel, mindestens zwei verschiedene Effektpigmente sowie optional weitere Zusatzstoffe umfassen, wobei es sich bei den Effektpigmenten um 10 bis 40 Gew.-% mindestens eines Metalleffektpigmentes sowie 8 bis 30 Gew.-% mindestens eines teilweise lichtdurchlässigen Effektpigmentes handelt, mit der Maßgabe, dass die Gesamtmenge aller Effektpigmente in der Druckfarbe 18 bis 55 Gew.-% beträgt, wobei die Mengen jeweils auf die Summe aller Bestandteile der Druckfarbe bezogen sind.

In einem weiteren Aspekt der Erfindung wurden die Verwendung der besagten Metallic-Druckfarben zum Veredeln von bedruckten Substraten sowie ein Verfahren zum Veredeln von Drucken gefunden.

Überraschenderweise wurde gefunden, dass durch die erfindungsgemäße Kombination von Metalleffektpigmenten mit teilweise lichtdurchlässigen Effektpigmenten sowie einem das übliche Maß übersteigenden Pigmentierungsgrad Druckfarben erhalten werden, mit denen Metallic-Elemente gedruckt werden können, deren Qualität der mittels klassischer Bronzierung erreichbaren Qualität gleichkommt. Darüber hinaus lassen sich sogar deutlich schärfere Ränder drucken. Überraschend für den Fachmann war einerseits die Tatsache, dass derartig hohe Pigmentierungsgrade überhaupt erreichbar waren, ohne dass die Druckeigenschaften der Druckfarbe darunter litten. Weiterhin überraschend war vor allem auch die Einfachheit der Lösung. Die Qualitätsverbesserung wird sowohl bei Flexo-, Tief-, Offset-, Sieb- oder Buchdruckfarben erzielt.

Zu der Erfindung ist im Einzelnen das Folgende auszuführen:

Bei den erfindungsgemäßen Metallic-Druckfarben kann es sich um Flüssig-Druckfarben wie beispielsweise Flexodruck-, Tiefdruck- oder Siebdruckfarben handeln, oder es kann sich um pastöse Druckfarben, beispielsweise für den Offset- oder Buchdruck handeln. Neben den Effektpigmenten sowie optional zusätzlichen Farbmitteln umfassen sie mindestens ein Lösemittel oder ein Lösemittelgemisch, mindestens ein polymeres Bindemittel sowie optional weitere Zusatzstoffe. Es kann sich sowohl um Druckfarben handeln, welche durch Wegschlagen und/oder Verdampfen des Lösemittels trocknen, um oxidativ trockende oder nach weiteren Mechanismen trocknende Farben oder auch um UV-härtbare Farben. Die Begriffe "pastöse Druckfarben" und "Flüssigdruckfarben" sind dem Fachmann bekannt. Flüssigdruckfarben enthalten vergleichsweise niedrig viskose und niedrige siedende Lösemittel, während pastöse Druckfarben vergleichsweise hoch viskose und hoch siedende Lösemittel enthalten. Weitere Einzelheiten zur Klassifizierung von Druckfarben sind beispielsweise in Römpp-Lexikon "Lacke und Druckfarben", Thieme-Verlag, Stuttgart, 1998, S. 157 ff. offenbart (insbesondere Seiten 159/160, Tabellen 4 und 5 sowie Abbildung auf Seite 160).

Beiden Typen von Druckfarben liegt das gleiche erfinderische Prinzip zugrunde, nämlich ein Gemisch zweier Effektpigmente unterschiedlichen Typs in Verbindung mit einer hohen Pigmentierung.

Die erfindungsgemäßen Druckfarben umfassen mindestens zwei verschiedene Effektipgmente. Der Begriff "Effektpigmente" ist beispielsweise in Römpps-Lexikon "Lacke und Druckfarben", Thieme-Verlag, Stuttgart, 1998, S. 176 definiert. Hierunter werden Pigmente verstanden, deren optischer Effekt vorzugsweise auf Lichtreflexion beruht.

Die erfindungsgemäßen Druckfarben umfassen mindestens ein Metalleffektpigment. Metalleffektpigmente sind bekannt. Bei Metalleffektpigmenten handelt es sich um blättchenförmige Metallpigmente, die im wesentlichen nicht lichtdurchlässig sind, sondern das einfallende Licht nahezu vollständig reflektieren. Dementsprechend sind die eingesetzten Metalleffektpigmente deckend.

Die Metalleffektpigmente können beispielsweise aus Aluminium, Kupfer, Zink, Zinn oder ihren Legierungen bestehen. Es kann sich beispielsweise um sogenannte Goldbronzen aus Kupfer-Zink-Legierungen handeln. Der Farbton kann in bekannter Art und Weise durch die Zusammensetzung der Legierung gesteuert werden. Es kann sich auch um modifierte Pigmente handeln. Die Goldbronzen können beispielsweise gezielt oberflächlich oxidiert werden (sogenannte feuergefärbte Bronzen). Die dünnen Oxidschichten auf der Oberfläche des Metalls rufen Interferenzeffekte hervor, durch die besonders reizvolle optische Effekte erzielt werden können. Die Goldbronzen können zur besseren Haltbarkeit, insbesondere in wässrigen Systemen, auch vergütet werden, beispielsweise durch Beschichtung mit SiO₂. Silbereffekte können durch die Verwendung von Aluminium-Pigmenten, auch Silberbronzen genannt, erhalten werden. Zur Anwendung in wässrigen Systemen können Silberbronzen passiviert und/oder mit Inhibitoren behandelt werden. Aluminium-Plättchen können auch oberflächlich einfach oder mehrfach beschichtet werden, beispielsweise mit dünnen Metalloxid-Schichten, wie beispielsweise aus Eisenoxiden. Durch Interferenzeffekte an den dünnen Metalloxid-Schichten können weitere optische Effekte erzielt werden. Weitere Einzelheiten zu Metalleffektpigmenten sind beispielsweise in *"Metal Effect Pigments"* in Ullmann's Encylopedia of Industrial Chemistry, 6^{th} Edition, Electronic Release, Wiley-VCH, Weinheim 2000 offenbart. Metalleffektpigmente sind kommerziell erhältlich, beispielsweise von der Fa. Eckart-Werke, Fürth.

Die Teilchengröße der eingesetzten Metalleffektpigmente wird vom Fachmann je nach den gewünschten Eigenschaften sowie dem gewünschten Verwendungszweck der Druckfarbe festgelegt. Im Regelfalle sollte die mittlere Teilchengröße (mittlerer Durchmesser der Plättchen) ca. 2 bis ca. 20 µm betragen, ohne dass die Erfindung damit auf diesen Bereich beschränkt sein soll. Besonders bewährt hat sich eine mittlere Teilchengröße von ca. 7 bis ca. 15 µm.

Selbstverständlich können auch Gemische zweier oder mehrerer verschiedener Metalleffektpigmente eingesetzt werden.

Im Falle von flüssigen Metallic-Druckfarben werden erfindungsgemäß 20 bis 60 Gew.-% Metalleffektpigmente bezüglich der Summe aller Bestandteile der flüssigen Druckfarbe eingesetzt. Bevorzugt werden 25 bis 45 Gew.-%, besonders bevorzugt 30 bis 40 Gew.-% und beispielsweise 35 Gew.-% eingesetzt.

Im Falle von pastösen Metallic-Druckfarben werden erfindungsgemäß 10 bis 40 Gew.-% Metalleffektpigmente bezüglich der Summe aller Bestandteile der pastösen Druckfarbe eingesetzt. Bevorzugt werden 10 bis 30 Gew.-% und besonders bevorzugt 10 bis 15 Gew.-% eingesetzt.

Die erfindungsgemäßen Druckfarben umfassen weiterhin mindestens ein teilweise lichtdurchlässiges Effektpigment. Selbstverständlich können auch Gemische mehrerer verschiedener teilweise lichtdurchlässiger Effektpigmente eingesetzt werden.

Erfindungsgemäß handelt es sich bei den teilweise lichtdurchlässigen Effektpigmenten um Perlglanzpigmente oder teilweise lichtdurchlässige Effektpigmente auf Basis von Flüssigkristallen. Perlglanzpigmente bestehen aus transparenten oder semitransparenten plättchenförmigen Substraten, wie beispielsweise Glimmer, synthetischem Glimmer, Talkum, Kaolin oder Glas, die mit farblosen oder farbigen Metalloxiden wie beispielsweise Fe₂O₃, Fe₃O₄, Cr₂O₃, TiO₂, SnO₂, ZnO, CuO oder NiO sowie anderen Metalloxiden beschichtet sind. Es kann sich dabei um eine einheitliche Schicht oder mehrere aufeinanderfolgende Schichten handeln. Je nach Art des Oxids sowie der Dicke und Anzahl der Schichten lassen sich unterschiedliche Effekte erzielen. Goldfarbene Pigmente lassen sich beispielsweise mittels Eisenoxid-Schichten, silberfarbene Pigmente mittels Titandioxid-Schichten erhalten. Bevorzugt sind Perlglanzpigmente auf Basis von Glimmer sowie Eisenoxid- und/oder Titandioxid-Schichten.

Weitere Einzelheiten zu Perlglanzpigmenten sind beispielsweise in *"Nacreous and Interference Pigments"* in Ullmann's Encylopedia of Industrial Chemistry, 6^{th} Edition, Electronic Release, Wiley-VCH, Weinheim 2000 oder WO 98/13426, WO 98/53010 oder DE 101 24 657 offenbart.

Die Teilchengröße der eingesetzten teilweise lichtdurchlässigen Effektpigmente wird vom Fachmann je nach den gewünschten Eigenschaften sowie dem Verwendungszweck der Druckfarbe festgelegt. Technische Produkte weisen immer eine bestimmte Teilchengrößenverteilung auf. Im Regelfalle beträgt die Mindestgröße (Durchmesser der Plättchen) 1 µm, während ein Durchmesser von max. 500 µm im Regelfalle nicht überschritten werden sollte. Besonders bewährt hat sich eine Größe von 10 bis 120 µm für Flexo-, Tief-, Buch- und Siebdruckanwendungen; für Offsetanwendungen 5 bis 25 µm.

Die Pigmente können auch mit weiteren Bestandteilen, z.B. mit Dispergierhilfsmitteln behandelt sein.

Perlglanzpigmente sind kommerziell erhältlich, beispielsweise als Iriodin^{®}/Afflair^{®} (Fa. Merck KGaA, Darmstadt), oder Phoenix® Perlglanzpigmente (Fa. Eckart-Werke Fürth).

Es können aber auch andersartige teilweise lichtdurchlässige Effektpigmente eingesetzt werden. Zu nennen sind hier insbesondere Effektpigmente auf Basis von Flüssigkristallen, wie beispielsweise Helicon® (Fa. Wacker) oder Paliochrom® (Fa. BASF).

Im Falle der flüssigen Metallic-Druckfarben beträgt die Menge der teilweise lichtdurchlässigen Effektpigmente erfindungsgemäß 20 bis 60 Gew.-% bezüglich der Summe aller Bestandteile der Druckfarbe. Bevorzugt werden 25 bis 45 Gew.-%, besonders bevorzugt 25 bis 35 Gew.-% und beispielsweise 30 Gew.-% eingesetzt.

Im Falle der pastösen Metallic-Druckfarben beträgt die Menge der teilweise lichtdurchlässigen Effektpigmente erfindungsgemäß 8 bis 30 Gew.-% bezüglich der Summe aller Bestandteile der Druckfarbe. Bevorzugt werden 10 bis 25 Gew.-%, besonders bevorzugt 15 bis 20 Gew.-% eingesetzt.

Erfindungsgemäß beträgt im Falle der Flüssig-Druckfarben der Gehalt der Metalleffektpigmente sowie der teilweise lichtdurchlässigen Effektpigmente zusammen 40 bis 80 Gew.-%, bevorzugt 50 bis 75 Gew.-%, besonders bevorzugt 55 bis 70 Gew.-% und beispielsweise 65 Gew.-%, jeweils bezogen auf die Summe aller Bestandteile der Metallic-Druckfarbe.

Im Falle der pastösen Druckfarben beträgt der Gehalt der Metalleffektpigmente sowie der teilweise lichtdurchlässigen Effektpigmente zusammen 18 bis 55 Gew.-%, bevorzugt 20 bis 50 Gew.-%, besonders bevorzugt 25 bis 40 Gew.-% und beispielsweise 30 Gew.-%, jeweils bezogen auf die Summe aller Bestandteile der Metallic-Druckfarbe.

Der Fachmann trifft unter den Metalleffektpigmenten sowie den teilweise lichtdurchlässigen Effektpigmenten je nach dem gewünschten optischen Effekt eine geeignete Auswahl. Es können beispielsweise typische Gold- oder Silberfarben formuliert werden. Für goldene Farbtöne hat sich die Kombination von einer oder mehreren Goldbronzen mit einem ebenfalls goldfarbenen Perlglanzpigment (z.B. Iriodin^{®} 305 Solargold) bewährt. Zur Feinsteuerung der Glitzer-Effekte können beispielsweise noch Silberbronzen zugemischt werden. Bei Verwendung von anderen Perlglanzinterferenzpigmenten lassen sich verschiedenste Farbflop- oder Changierungseffekte erhalten.

Neben den mindestens zwei Effektpigmenten können die erfindungsgemäßen Druckfarben darüber hinaus optional noch weitere Farbmittel bzw. Farbpigmente umfassen. Hierdurch können weitere optische Effekte erzielt werden.

Durch Kombination mit zusätzlichen Farbmitteln lassen sich auch Goldfarben ohne den Einsatz von Goldbronzen erhalten, indem man eine Silberbronze einsetzt, mit einem gelben oder orangen Farbmittel abmischt und wie oben dargestellt ein goldfarbenes Perlglanzpigment hinzufügt (sogenanntes "schwermetallfreies" Gold).

Lösemittel bzw. Lösemittelgemisch dienen u.a. zum Lösen der Bindemittel, aber auch zur Einstellung wichtiger Anwendungseigenschaften der Druckfarben, wie beispielsweise der Viskosität oder der Trocknungsgeschwindigkeit. Die Art des Lösemittels richtet sich nach dem jeweiligen Verwendungszweck der Druckfarbe und werden vom Fachmann entsprechend ausgewählt.

Lösemittel bzw. Komponenten von Lösemittelgemischen für pastöse Druckfarben umfassen insbesondere hochsiedende Mineralöle oder pflanzliche Öle wie beispielsweise Sojaöl. Der Siedepunkt beträgt im Regelfalle nicht weniger als 230°C, kann aber auch mehr als 300°C betragen.

Für Flüssig-Druckfarben wie Flexo- und Tiefdruckfarben eingesetzte Lösemittel umfassen insbesondere niedrig siedende Lösemittel. Der Siedepunkt beträgt im Regelfalle nicht mehr als 140°C. Siebdruckfarben sind ähnlich formuliert wie Flexo- oder Tiefdruckfarben, sie sind lediglich etwas viskoser eingestellt und weisen üblicherweise Lösemittel mit etwas höheren Siedepunkten auf. Beispiele geeigneter Lösemittel für Flüssigdruckfarben umfassen Ethanol, 1-Propanol oder 2-Propanol, substituierte Alkohole wie beispielsweise Ethoxypropanol oder Ester wie beispielsweise Ethylacetat, lsopropylacetat, n-Propyl- oder n-Butylacetat. Es können selbstverständlich auch Gemische verschiedener Lösemittel eingesetzt werden. Beispielsweise kann es sich um ein Gemisch aus Ethanol und Estern wie Ethylacetat oder Propylacetat handeln. Für das Drucken mit Flexodruckplatten ist es regelmäßig empfehlenswert, dass der Anteil der Ester am Gesamtlösemittel ca. 20 - 25 Gew.-% nicht überschreitet. Als Lösemittel für Flüssigdruckfarben sind bevorzugt auch Wasser oder überwiegend wässrige Lösemittelgemische einsetzbar.

Je nach Art der Druckfarbe werden üblicherweise 10 bis 55 Gew.-% Lösemittel bezüglich der Summe aller Bestandteile eingesetzt.

Strahlungshärtbare Druckfarben enthalten im allgemeinen nicht die oben genannten Lösemittel, sondern Reaktiwerdünner. Reaktiwerdünner erfüllen typischerweise eine Doppelfunktion. Einerseits dienen sie zum Vernetzen bzw. Härten der Druckfarbe, andererseits dienen sie aber auch wie konventionelle Lösemittel zum Einstellen der Viskosität. Beispiele umfassen Beispiele umfassen Butylacrylat, (2-Ethylhexyl)acrylat, sowie insbesondere mehrfunktionelle Acrylate wie 1,4-Butandioldi(meth)acrylat, 1,6-Hexandioldi(meth)acrylat oder Trimethylolpropantri(meth)acrylat.

Als Bindemittel für die erfindungsgemäßen Metallic-Druckfarben können prinzipiell die für Flüssig-Druckfarben und pastöse Druckfarben üblichen Bindemittel eingesetzt werden. Je nach dem gewünschten Anwendungszweck und den gewünschten Eigenschaften trifft der Fachmann eine geeignete Auswahl. Beispiele geeigneter Bindemittel umfassen Polyester, Polyamide, PVC-Copolymerisate, aliphatische und aromatische Ketonharze, Melamin-Hamstoff-Harze, Melamin-Formaldehyd-Harze, Maleinate, Kolophoniumderivate, Casein bzw. Casein-Derivate, Ethylcellulose, Nitrocellulose oder aromatische bzw. aliphatische Polyurethane. Es können auch Polymere oder Copolymere von Vinylacetat, Vinylalkohol, Acrylaten, Methacrylaten, Vinylpyrolidon oder Vinylacetalen eingesetzt werden. Von besonderem Vorteil können funktionelle Gruppen aufweisende hyperverzweigte Polymere, beispielsweise hyperverzweigte Polyurethane, Polyharnstoffe oder Polyesteramide eingesetzt werden, wie von WO 02/36695 und WO 02/36697 offenbart. Es können selbstverständlich auch Gemische verschiedener polymerer Bindemittel eingesetzt werden, vorausgesetzt, die ausgewählten Bindemittel weisen in Kombination miteinander keine unerwünschten Eigenschaften auf. Die Menge aller Bindemittel beträgt üblicherweise 5 - 20 Gew.-% bzgl. der Summe aller Bestandteile der Druckfarbe.

Für Flüssig-Druckfarben besonders bevorzugte Bindemittel umfassen beispielsweise Nitrocellulose, Ethylcellulose, Hydroxyethylcellulose sowie aliphatische und aromatische Polyurethane und Polyharnstoffe, insbesondere hyperverzweigte Polyurethane und Polyharnstoffe sowie Mischungen davon.

Als Bindemittel für wasserverdünnbare Metallic-Druckfarben kommen insbesondere Copolymere auf Basis von (Meth)acrylsäure und/oder deren Estern mit Styrol in Frage. Derartige Bindemittel sind als Lösungen oder Dispersionen für den Einsatz in Druckfarben beispielsweise unter dem Namen Zinpol^{®} (Fa. Worlée) kommerziell erhältlich. Weitere Beispiele umfassen aromatische bzw. aliphatische wässrige Polyurethane, Polyester und auf wässrige Polyamide.

Für pastöse Druckfarben bevorzugte Bindemittel umfassen beispielsweise Kolophoniumharze oder modifizierte Kolophoniumharze. Beispiele für modifizierte Kolophoniumharze umfassen mit Polyolen wie beispielsweise Glycerin oder Pentaerythrit ganz oder teilweise veresterte Kolophoniumharze.

Strahlungshärtbare Druckfarben umfassen Bindemittel, die vernetzbare Gruppen umfassen, wie beispielsweise olefinische Gruppen, Vinylether- oder Epoxidgruppen.

Die erfindungsgemäßen Metallic-Druckfarben können weiterhin einen oder mehrere Hilfsstoffe beziehungsweise Additive umfassen. Beispiele für Additive und Hilfsstoffe sind Füllstoffe wie Calciumcarbonat, Aluminiumoxidhydrat oder Aluminium- bzw. Magnesiumsilikat. Wachse erhöhen die Abriebfestigkeit und dienen der Erhöhung der Gleitfähigkeit. Beispiele sind insbesondere Polyethylenwachse, oxidierte Polyethylenwachse, Petroleumwachse oder Ceresinwachse. Fettsäureamide können zur Erhöhung der Oberflächenglätte eingesetzt werden. Weichmacher dienen der Erhöhung der Elastizität des getrockneten Films. Für strahlungshärtbare Druckfarben wird als Additiv weiterhin mindestens ein Fotoinitiator oder ein Fotoinitiatorsystem eingesetzt. Zum Dispergieren der Effektpigmente können Dispergierhilfsmittel eingesetzt werden. Mittels Fettsäuren kann ein Aufschwimmen der Effektpigmente in der gedruckten Schicht erreicht werden, so dass die Pigmente in an der oberen Grenzfläche der Druckschicht angereichert sind. Hierdurch können vorteilhaft verbesserte Metallic-Effekte erzielt werden. Weiterhin können auch Antiabsetzmittel zugesetzt werden. Derartige Zusätze verhindern die Sedimentation der Effektpigmente. Beispiele umfassen Kieselsäure, Cellulose-Derivate oder auch Wachse. Zur Formulierung dünnflüssiger Metalic-Druckfarben, wie Flexo-, Tief- oder Siebdruckfarben ist der Zusatz von Antiabsetzmitteln meist empfehlenswert, wenngleich nicht immer unbedingt erforderlich. Die Gesamtmenge aller Additive und Hilfsstoffe sollte üblicherweise 20 Gew.-% bezüglich der Summe aller Bestandteile der Druckfarbe nicht übersteigen und beträgt bevorzugt 0,1 - 10 Gew.-%.

Die Herstellung der erfindungsgemäßen Metallic-Druckfarben kann in prinzipiell bekannter Art und Weise durch intensives Vermischen bzw. Dispergieren der Bestandteile in üblichen Apparaturen wie beispielsweise Dissolvern oder Rührwerken erfolgen. Der Fachmann wird beim Einsatz von Dissolvern darauf achten, dass der Energieeintrag nicht zu hoch ist, um ein Beschädigen der Metalleffektpigmente zu vermeiden. Umgekehrt muss der Energieeintrag natürlich so hoch sein, dass ein ordnungsgemäßes Dispergieren der Pigmente ermöglicht wird. Falls neben den Effektpigmenten noch übliche Farbpigmente eingesetzt werden, kann es empfehlenswert sein, diese in einem Teil oder in der Gesamtmenge des Lösemittels, Bindemittels sowie gegebenenfalls der Hilfsstoffe der Metallic-Druckfarbe vorzudispergieren, und die Effektpigmente erst später zuzugeben. Auf diese Art und Weise wird eine besonders gute Dispergierung der zusätzlichen Pigmente erreicht, ohne die Effektpigmente durch zu starke Dispergierung zu schädigen. Anstelle der Pigmente können auch vordispergierte Pigmentkonzentrate zugegeben werden. Ganz besonders elegant kann hierbei auch eine handelsübliche Druckfarbe in geringen Mengen eingesetzt werden, vorausgesetzt, die zugesetzte Druckfarbe ist mit der Rezeptur der Metallic-Druckfarbe verträglich und verschlechtert nicht deren Eigenschaften.

Die optimalen Dispergierbedingungen lassen sich vom Fachmann für die jeweilige Rezeptur gegebenenfalls durch wenige Routineversuche ermitteln.

Besonders bevorzugte Metallic-Druckfarben enthalten Silber- und/oder Goldbronzen als Metalleffektpigmente. Flexodruckfarben werden bevorzugt wässrig formuliert.

Die erfindungsgemäßen Metallic-Druckfarben eignen sich prinzipiell zum Bedrucken verschiedenster Substrate, wie beispielsweise Papier, Kartonagen, Pappe, Wellpappe, Kunststoff- oder Metallfolien, Verbundmaterialien, Bleche, Textilien, Glas oder Porzellan. Selbstverständlich sind nicht alle Typen von Druckfarben sowie Formulierungen für alle Substrate gleichermaßen gut geeignet. Dem Fachmann ist bekannt, welche Arten von Druckverfahren sowie Komponenten von Druckfarben für welche Substrate besonders geeignet sind.

Die erfindungsgemäßen Metallic-Druckfarben können insbesondere zum Veredeln von bedruckten Substraten verwendet werden. Hierbei wird zunächst ein einfarbiger- oder mehrfarbiger Druck hergestellt, beispielsweise mittels Offset-, Tief- oder Flexodruck. Anschließend wird das bedruckte Substrat mit der erfindungsgemäßen Metallic-Druckfarbe entsprechend den gewünschten Motiven bedruckt. Beispiele umfassen Etiketten für Wein-, Bier- oder Cognacflaschen, welche mit zusätzlichen Gold- oder Silbermotiven bedruckt werden, Verpackungen, beispielsweise für Zigaretten, Kosmetika oder Parfüm, aber auch beispielsweise Tapeten, Geschenk- oder Dekorpapiere, Urkunden oder Prospekte. Selbstverständlich kann die Farbe auch vollflächig verdruckt werden. Es können auch Textilien oder Porzellan bedruckt werden.

Das Bedrucken mit der erfindungsgemäßen Metallic-Druckfarbe kann In-line oder Offline erfolgen. In einem bevorzugten Verfahren zum Veredeln von Drucken setzt man eine Einfarben- oder Mehrfarbendruckmaschine ein, welche mit einem zusätzlichen Druckwerk zum Drucken der Metallic-Druckfarbe ausgerüstet ist. Mittels der Druckmaschine wird ein Motiv auf das Substrat gedruckt und mittels des zusätzlichen Druckwerkes sowie der erfindungsgemäßen Metallic-Druckfarbe werden Metallic-Motive auf das aufgedruckt. Das Bedrucken mit dem Metallic-Motiv kann als Vordrucken vor dem Drucken des "normalen" Motivs erfolgen oder als Überdruck danach. Im Regelfalle ist es empfehlenswert, die Metallic-Druckfarbe vor dem Einsatz noch einmal zu homogenisieren, beispielsweise durch Aufrühren.

Bei der Ein- oder Mehrfarbendruckmaschine kann es sich beispielsweise um eine Flexo-, Tief- oder Offsetdruckmaschine oder eine Kombinationsdruckmaschine handeln. Bevorzugt handelt es sich um eine Offsetdruckmaschine, insbesondere eine Bogenoffsetmaschine. In einer weiterhin bevorzugten Ausführungsform handelt es sich bei dem zusätzlichen Druckwerk um ein Flexo- oder Tiefdruckwerk.

Die nach dem erfindungsgemäßen Verfahren erhaltene Metallic-Schicht ist im Regelfalle deutlich abriebstabiler als bei der klassischen Bronzierung, so dass das Aufbringen einer Schutzschicht, beispielsweise durch Überlackieren nicht erforderlich ist. Selbstverständlich können die Drucke aber im Anschluss an das Veredeln mit Metallic-Druckfarbe noch mit einer oder mehreren Schutzschichten versehen werden.

Zum Verdrucken bzw. Auftragen der erfindungsgemäßen Metallic-Druckfarbe können aber auch spezielle Offline-Coater oder Lackveredelungsmaschinen eingesetzt werden. Sie eignet sich auch zum Einsatz in der Papierstreicherei oder mittels Luftbürsten.

Die erfindungsgemäße Druckfarbe kann auch auch mittels Tampondruck verdruckt werden, beispielsweise zum Bedrucken von Porzellan oder Keramik. Zum Bedrucken von Textilien ist die Siebdrucktechnik besonders geeignet.

Mittels den erfindungsgemäßen flüssigen oder pastösen Metallic-Druckfarben sowie dem erfindungsgemäßen Verfahren lassen sich Effekte erzielen, die bislang nur mittels der klassischen Bronzierung zugänglich waren. Die Herstellung hochwertiger, mittels Metallic-Effekten veredelter Drucke ist somit zu deutlich niedrigeren Kosten möglich. Auch die gedruckten Schichten weisen ein weitgehend winkelunabhängiges metallisches Glitzern auf. Die Randbereiche der bedruckten Motive sind sogar wesentlich schärfer als bei der klassischen Bronzierung, so dass feine Motive sogar mit höherer Auflösung als bisher herstellbar sind.

Die folgenden Beispiele sollen die Erfindung näher erläutern:

### Versuch 1

Wässrige Metallic-Druckfarbe für den Flexodruck (Goldeffekt)
Für erfindungsgemäße Druckfarbe wurden die folgenden Komponenten eingesetzt:

| Komponenten | Menge [Gew.-%] |
|---|---|
| Wässrige Goldbronzepaste auf Messingbasis, durchschnittliche Partikelgröße 10 µm (Festkörper 80 Gew.-% Bronze, 20 Gew.-% Wasser) | |
| (Goldbronze Aquador® Reichbleigold, WP 4120/80, Fa. Schlenk) | |
| Goldfarbenes Perlglanzpigment auf Glimmerbasis, Partikelgröße 10 - 60 µm (Iriodin® Pearlets, Solar Gold W, Fa. Merck KgaA) | 30 |
| Bindemittel | 26 |
| Acrylat-Styrol-Dispersion, Festkörper 35 Gew.-% Wasseranteil 65 Gew.-%, (Zinpol^{®} 146, Fa. Worlėe) | |
| Wasser | 6,5 |
| Hilfsstoffe | |
| PE Wachs Emulsion, 40% Festkörper, 60% Wasser | 3 |
| (Lubaprint VP 499, Fa. Bader) | |
| Entschäumer auf Basis Siliconöl | 0,5 |
| (Tego Foamex^{®} 3062, Fa. Degussa) | |
| Summe | 100 |

Versuchsdurchführung: Das Bindemittel wird mit dem Wasser und den Hilfsstoffen (Wachse, Entschäumer) in ein geeignetes Behältnis gegeben und 5 Minuten homogenisiert. Anschließend wird die Bronzepaste hinzugeben und man lässt den Ansatz weitere 25 Minuten rühren. Zum Schluss fügt man das Perlglanzpigment zu und rührt nochmals 30 Minuten. Wenn die Viskosität zu hoch ist, kann mit Wasser korrigiert werden. Vor dem Drucken wird die Farbe zum Homogenisieren mindestens 5 Minuten aufgerührt.

### Versuch 2

Wässrige Metallic-Druckfarbe für den Flexodruck (Silbereffekt)
Für erfindungsgemäße Druckfarbe wurden die folgenden Komponenten eingesetzt

| Komponenten | Menge [ Gew.-%] |
|---|---|
| Wässrige silberfarbene Metalleffektpigmentpaste auf Aluminium-basis, durchschnittliche Partikelgröße 8 -12 µm Festkörper: 65%, 35% Wasser | 25 |
| (Alupaste Hydroxal W 2020, Fa. Eckart,) | |
| Silberfarbenes Perlglanzpigment auf Glimmerbasis, Partikelgröße 10 - 60 µm (Iriodin® Pearlets 103, Sterling White W, Fa. Merck KgaA) | 25 |
| Bindemittel: Acrylat-Styrol-Dispersion (Festkörper 35 Gew.-% Wasseranteil 65 Gew.-%) (Zinpol^{®} 146, Fa. Worlėe) | 30 |
| Wasser | 14,5 |
| Hilfsstoffe PE Wachs Emulsion, 40% Festkörper, 60% Wasser (Lubaprint^{®} VP 499, Fa. Bader) | 3 |
| Entschäumer auf Basis Siliconöl (Tego Foamex^{®} 3062, Fa. Degussa) | 0,5 |
| Verdicker auf Basis eines wässrigen Polyurethans (Festkörper 75%, Wasser 25%) (Borchigel^{®} L 75 N, Fa. Bayer AG) | 2 |
| Summe | 100 |

Versuchsdurchführung: Das Bindemittel wird mit dem Wasser und den Hilfsstoffen (Wachse, Entschäumer, Verdicker) in ein geeignetes Behältnis gegeben und 5 Minuten homogenisiert. Anschließend wird die Aluminiumpaste hinzugeben und man lässt den Ansatz weitere 25 Minuten rühren. Zum Schluss fügt man das Perlglanzpigment zu und rührt nochmals 30 Minuten. Wenn die Viskosität zu hoch ist, kann mit Wasser korrigiert werden. Vor dem Drucken wird die Farbe zum Homogenisieren mindestens 5 Minuten aufgerührt._{.}

### Versuch 3

### Metallic-Druckfarbe mit organischen Lösemitteln für den Tief- bzw. Flexodruck (Goldeffekt)

Für erfindungsgemäße Druckfarbe wurden die folgenden Komponenten eingesetzt:

| Komponenten | Menge [ Gew.-%] |
|---|---|
| Goldbronzepulver auf Messingbasis, durchschnittliche Partikelgröße 7-9 µm (Goldbronze Resist Rotoflex®, Reichbleichgold, Fa. Eckart) | 25 |
| Goldfarbenes Perlglanzpigment auf Glimmerbasis, Partikelgröße 10 - 60 µm (Iriodin® Pearlets, Solar Gold S, Fa. Merck KgaA) | 25 |
| Bindemittel Polyvinylbutyral und Aldehydharz | 27 |
| Lösemittel: Ethanol + Ethylacetat | 20 |
| Hilfsstoffe PE Wachs Emulsion, 40% Festkörper, 60% Ethanol (Lubaprint 654D, Fa. Bader) | 3 |
| Summe | 100 |

Versuchsdurchführung: Das Bindemittel wird in dem Ethanol- / Ethylacetat-Gemisch und der Wachsemulsion in ein geeignetes Behältnis gegeben und 5 Minuten homogenisiert. Anschließend wird dass Goldbronzepulver und dann dass Perlglanzpigment portionsweise hinzugeben und man lässt den Ansatz weitere 30 Minuten rühren. Wenn die Viskosität zu hoch ist, kann mit Ethanol bzw. Ethylacetat korrigiert werden. Vor dem Drucken wird die Farbe zum Homogenisieren mindestens 5 Minuten aufgerührt.

### Versuch 4

### Metallic-Druckfarbe mit organischen Lösemitteln für den Tief bzw. Flexodruck (Silbereffekt)

Für erfindungsgemäße Druckfarbe wurden die folgenden Komponenten eingesetzt

| Komponenten | Menge [ Gew.-%] |
|---|---|
| Lösemittelhaltige silberfarbene Metalleffektpigmentpaste auf Aluminiumbasis, durchschnittliche Partikelgröße 10 - 14 µm Festkörper: 65%, 35% Ethanol | 20 |
| (Alupaste Reflexal W 88 n.l., Fa. Eckart,) | |
| Silberfarbenes Perlglanzpigment auf Glimmerbasis | 25 |
| Partikelgröße 10 - 60 µm (Iriodin® Pearlets 103, | |
| Sterling White S, Fa. Merck KgaA) | |
| Bindemittel: | 15 |
| Nitrocellulose angefeuchtet in Ethanol, Festkörper 65%, | |
| 35% Ethanol | |
| Lösemittel: Ethanol + Ethylacetat | 30 |
| Hilfsstoffe | |
| PE Wachs Emulsion, 40% Festkörper, 60% Ethanol | 3 |
| (Lubaprint^{®} 654D, Fa. Bader) | |
| Monomerweichmacher | 7 |
| Summe | 100 |

Versuchsdurchführung: Das Bindemittel wird in dem Ethanol- / Ethylacetat-Gemisch und der Wachsemulsion in ein geeignetes Behältnis gegeben und 5 Minuten homogenisiert. Anschließend wird die Alupaste und dann dass Perlglanzpigment portionsweise hinzugeben und man lässt den Ansatz weitere 30 Minuten rühren. Wenn die Viskosität zu hoch ist, kann mit Ethanol bzw. Ethylacetat korrigiert werden. Vor dem Drucken wird die Farbe zum Homogenisieren mindestens 5 Minuten aufgerührt.

### Versuch 5

### Pastöse Metallic-Druckfarbe für den Buchdruck (Goldeffekt)

Zur Formulierung der Druckfarbe wurden die folgenden Komponenten eingesetzt:

| Komponenten | Menge [Gew.-%] |
|---|---|
| Goldfarbenes Metalleffektpigment, durchschnittliche Partikelgröße 9 µm (Bronzepaste Reichbleichgold, Fa. Eckart) | 35 |
| Goldenes Perlglanzpigment auf Glimmerbasis | 20 |
| (Iriodin® Pearlprint Litho Red Gold, Fa. Merck KgaA) | |
| Bindemittel | 35,6 |
| Modifizierte Kolophoniumharze, mit Lackleinöl verkocht | |
| (Lawter Bindemittel GV 126 und LV 4905 im Verhältnis 1:1) | |
| Lackleinöl | 3 |
| Gelbe Offsetdruckfarbe | 5 |
| (Gelb der Skalenfarbe F1 Drive, BASF Drucksysteme GmbH) | |
| Wachs | 1 |
| Trockner | 0,4 |
| Manganoctoat, in Mineralöl gelöst | |
| Summe | 100 |

Versuchsdurchführung: Bindemittel, Lackleinöl, die gelbe Offsetdruckfarbe, Wachs und Trockner werden mit einem Dissolver 15 Minuten homogenisiert. Danach wird das Produkt über eine geeignete Dreiwalze gegeben. Der so erhaltene Fimis wird dann langsam gerührt und zuerst die Bronzepaste und dann das Perlglanzpigment hinzugefügt und solange gerührt bis die Farbe homogen ist.

### Vergleichsversuch 1

Wässrige Metallic-Druckfarbe für den Flexodruck, welche nur ein Metalleffektpigment enthält.

Zur Formulierung der Druckfarbe wurden die folgenden Komponenten eingesetzt:

| Komponenten | Menge [ Gew.-%] |
|---|---|
| Wässrige Goldbronzepaste auf Messingbasis, durchschnittliche Partikelgröße 10 µm (Festkörper 80% Bronze, 20% Wasser) | 33 |
| (Goldbronze Aquador® Reichbleigold, WP 4120/80, Fa. Schlenk) | |
| Bindemittel | 37 |
| Acrylat-Styrol-Dispersion, Festkörper 35% Wasseranteil 65%, | |
| (Zinpol^{®} 146, Fa. Worlėe) | |
| Wasser | 23 |
| Hilfsstoffe | |
| PE Wachs Emulsion, 40% Festkörper, 60% Wasser | 3 |
| (Lubaprint VP 499, Fa. Bader) | |
| Entschäumer auf Basis Siliconöl | 0,5 |
| (Tego Foamex^{®} 3062, Fa. Degussa) | |
| Verdicker auf Basis eines wässrigen Polyurethans | 3,5 |
| Festkörper 75%, Wasser 25% | |
| (Borchigel^{®} L 75 N, Fa. Bayer AG) | |
| Summe | 100 |

Versuchsdurchführung: Das Bindemittel wird mit dem Wasser und den Hilfsstoffen (Wachse, Entschäumer, Verdicker) in ein geeignetes Behältnis gegeben und 5 Minuten homogenisiert. Danach wird die Goldbronzepaste hinzugeben und man lässt den Ansatz weitere 25 Minuten rühren. Zum Schluss fügt man das Perlglanzpigment zu und rührt nochmals 30 Minuten. Wenn die Viskosität zu hoch ist, kann mit Wasser korrigiert werden. Vor dem Drucken wird die Farbe zum Homogenisieren mindestens 5 Minuten aufgerührt.

### Vergleichsversuch 2

Metallic-Druckfarbe mit organischen Lösemitteln für den Tief- bzw. Flexodruck, welche nur ein Metalleffektpigment enthält.

Zur Formulierung der Druckfarbe wurden die folgenden Komponenten eingesetzt:

| Komponenten | Menge [ Gew.-%] |
|---|---|
| Goldbronzepulver auf Messingbasis, durchschnittliche Partikelgröße 7-9 µm | 33 |
| (Goldbronze Resist Rotoflex Reichbleichgold, Fa. Eckart) | |
| Bindemittel | 38 |
| Polyvinylbutyral und Aldehydharz | |
| Lösemittel: Ethanol, Ethylacetat | 26 |
| Hilfsstoffe | |
| PE Wachs Emulsion, 40% Festkörper, 60% Ethanol | 3 |
| (Lubaprint 654D, Fa. Bader) | |
| Summe | 100 |

Versuchsdurchführung: Das Bindemittel wird in dem Ethanol- / Ethylacetat-Gemisch und der Wachsemulsion in ein geeignetes Behältnis gegeben und 5 Minuten homogenisiert. Anschließend wird die Alupaste portionsweise hinzugeben und man lässt den Ansatz weitere 30 Minuten rühren. Wenn die Viskosität zu hoch ist, kann mit Ethanol bzw. Ethylacetat korrigiert werden. Vor dem Drucken wird die Farbe zum Homogenisieren mindestens 5 Minuten aufgerührt.

### Vergleichsversuch 3

Übliche Metallic-Druckfarbe für den Buchdruck gemäß Stand der Technik, welche nur ein Metalleffektpigment enthält.

Zur Formulierung der Druckfarbe wurden die folgenden Komponenten eingesetzt:

| Komponenten | Menge [Gew.-%] |
|---|---|
| Goldfarbenes Metalleffektpigment, durchschnittliche Partikelgröße 9 µm (Bronzepaste Reichbleichgold, Fa. Eckart) | 50 |
| Bindemittel: Basierend auf modifizierten Kolophoniumharzen, die mit Lackleinöl verkocht werden. Lawter Bindemittel GV 126 und LV 4905 im Verhältnis 1:1 | 40,6 |
| Lackleinöl | 3 |
| Gelbe Offsetdruckfarbe | 5 |
| (Gelb der Skalenfarbe F1 Drive, BASF Drucksysteme GmbH) | |
| Wachs | 1 |
| Trockner | 0,4 |
| Manganoctoat, in Mineralöl gelöst | |
| Summe | 100 |

Versuchsdurchführung: Bindemittel, Lackleinöl, die gelbe Offsetdruckfarbe, Wachs und Trockner werden mit einem Dissolver 15 Minuten homogenisiert. Danach wird das Produkt über eine geeignete Dreiwalze gegeben. Der so erhaltene Firnis wird dann langsam gerührt und die Bronzepaste hinzugefügt und solange gerührt bis die Farbe homogen ist.

### Druckversuche:

Zum Test wurden Etiketten auf einer Druckmaschine des Typs CD 102 Duo (Heidelberger Druckmaschinen) mittels Offset-Technik gedruckt, auf die anschließend mittels des Flexodruckwerkes der Maschine unter Verwendung der Druckfarben aus Versuchen und Vergleichsversuchen ein Muster aufgedruckt wurde. Die Druckfarben wurden vor Gebrauch jeweils noch einmal aufgerührt.

Die lösemittelbasierenden Farben wurden auf einer Moser Tiefdruckmaschine mit 4 Druckwerken gedruckt.

Die Buchdruckfarben wurden auf einer Heidelberger Speedmaster 72 im indirekten Buchdruck mit Hilfe einer Buchdruckplatte WS 43 von BASF Drucksysteme GmbH verdruckt.

Von jedem Druck wurden die Brillanz sowie die Schärfe der Ränder bewertet. Die Brillanz wurde visuell beurteilt. Insbesondere wurde hierbei der Lüstereffekt beachtet, also das Glitzern der beurteilten Druckfarben in Abhängigkeit vom Betrachtungswinkel.
Die Ergebnisse sind in Tabelle 1 zusammengefasst.

### Vergleichsversuch 4

### Klassische Bronzierung

Zum Vergleich wurden weiterhin die oben gedruckten Etiketten zur Veredelung nicht mittels Metallic-druckfarben bedruckt, sondern in bekannter Art und Weise bronziert. Hierzu wurde auf die Etiketten mit einer handelsüblichen Unterdruckfarbe hoher Viskosität und Klebrigkeit das gewünschte Muster aufgedruckt. Anschließend wurden die in der Bogenoffsetmaschine bedruckten Bögen über Transportbänder aus der Auslage der Druckmaschine herausgeführt und einer handelsüblichen Bronziermaschine zugeführt.

Die Auswertung der bronzierten Etiketten wurde nach den gleichen Kriterien wie oben vorgenommen und die Ergebnisse sind ebenfalls in Tabelle 1 enthalten.

| Versuchsnummer | Winkelabhängigkeit / Brillianz | Randschärfe |
|---|---|---|
| Versuch 1 | Winkelunabhängiger Glanz 1-2 | Gut |
| Gold | | |
| Versuch 2 | Winkelunabhängiger Glanz 2 | Gut |
| Silber | | |
| Versuch 3 | Winkelunabhängiger Glanz 1-2 | Gut |
| Gold | | |
| Versuch4 | Winkelunabhängiger Glanz 2 | Gut |
| Silber | | |
| Versuch 5 | Winkelunabhängiger Glanz 2-3 | Sehr gut |
| Gold | | |
| Vergleichsversuch 1 | Glanz stark winkelabhängig 2-3 | Gut |
| Gold | | |
| Vergleichsversuch 2 | Glanz stark winkelabhängig 2-3 | Gut |
| Gold | | |
| Vergleichsversuch 3 | Glanz stark winkelabhängig 3 | Sehr gut |
| Gold | | |
| Vergleichsversuch 4 | Winkelunabhängiger Glanz 1 | Mangelhaft |
| Gold | | Ausgefranster Rand |

| | | |
|---|---|---|
| Tabelle: 1 Bewertung der Ergebnisse von Versuchen und Vergleichsversuchen (1 = sehr gut, 2 = gut, 3 = befriedigend, 4 = ausreichend, 5 = mangelhaft). | | |

Die üblichen Metallicfarben gemäß den Vergleichsversuchen, welche nur ein Metalleffektpigment enthalten, weisen eine starke Winkelabhängigkeit des Glanzes auf. Das bedeutet, dass bei bestimmten Sichtwinkeln kein metallischer Glanz der Druckfarbe wahrnehmbar ist. In diesem Winkel erscheint die Farbe matt, sieht eher beige gelblich aus und zeigt keinen metallischen Glanz. Die erfindungsgemäßen Metallic-Farben weisen hingegen einen winkelunabhängigen Glanz auf. Bei der klassischen Bronzierung (Vergleichsversuch 4) wird zwar ebenfalls ein winkelunabhängiger-Glanz erhalten, aber die Ränder der gedruckten Motive sind sehr stark ausgefranst.

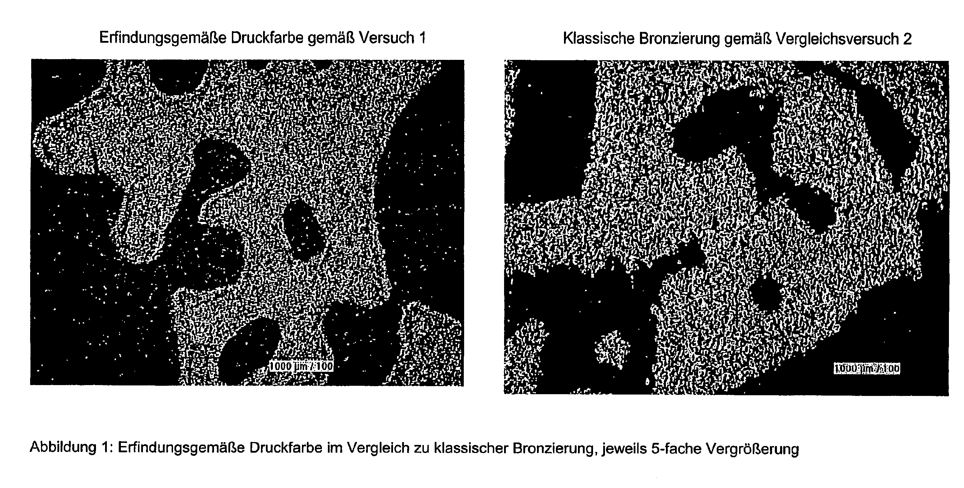

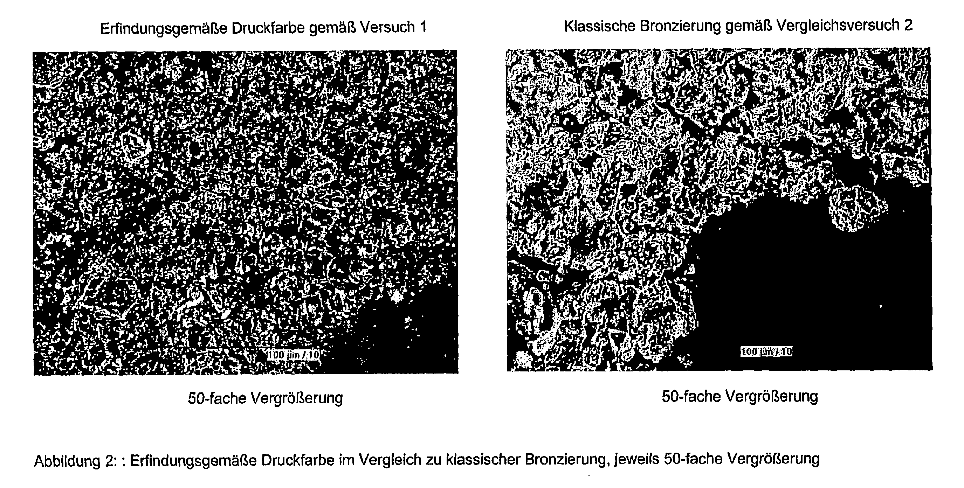

Abbildungen 1 und 2 zeigen Abbildungen der Drucke von Versuch 1 und von Vergleichsversuch 4 (klassische Bronzierung) in 5-facher und in 50-facher Vergrößerung.

In der 50-fachen Vergrößerung ist zu erkennen, dass die Oberfläche der mit der erfindungsgemäßen Farbe gedruckten Schicht sowie der mittels klassischer Bronzierung erhaltenen Schicht sehr ähnlich ist. Die Pigmente der gedruckten Schicht sind nicht in einer Vorzugsrichtung ausgerichtet. In der 5-fachen Vergrößerung ist sehr deutlich zu erkennen, dass die Ränder der gedruckten Schicht deutlich schärfer sind, während die klassische Bronzierung ausgefranste Ränder ergibt.

## Patentansprüche

1. Flüssige Metallic-Druckfarbe für den Flexo-, Tief- oder Siebdruck, mindestens umfassend ein Lösemittel oder Lösemittelgemisch, mindestens ein polymeres Bindemittel, mindestens zwei verschiedene Effektpigmente sowie optional weitere Zusatzstoffe, **dadurch gekennzeichnet, dass** es sich bei den Effektpigmenten um 20 bis 60 Gew.-% mindestens eines Metalleffektpigmentes sowie 20 bis 60 Gew.-% mindestens eines Perlglanzpigments, bestehend aus transparenten oder semitransparenten plättchenförmigen Substraten, ausgewählt aus der Gruppe bestehend aus Glimmer, synthetischem Glimmer, Talkum, Kaolin und Glas, die mit farblosen oder farbigen Metalloxiden beschichtet sind, und/oder eines teilweise lichtdurchlässigen Effektpigments auf Basis von Flüssigkristallen, handelt, mit der Maßgabe, dass die Gesamtmenge aller Effektpigmente in der Druckfarbe 40 bis 80 Gew.-% beträgt, wobei die Mengen jeweils auf die Summe aller Bestandteile der Druckfarbe bezogen sind.

2. Metallic-Druckfarbe gemäß Anspruch 1, **dadurch gekennzeichnet, dass** die Gesamtmenge aller Effektpigmente in der Druckfarbe 50 bis 75 Gew.-% beträgt.

3. Metallic-Druckfarbe gemäß Anspruch 1, **dadurch gekennzeichnet, dass** die Gesamtmenge aller Effektpigmente in der Druckfarbe 55 bis 70 Gew.-% beträgt.

4. Metallic-Druckfarbe gemäß einem der Ansprüche 1 bis 3, **dadurch gekennzeichnet, dass** die Menge der Metalleffektpigmente in der Druckfarbe 25 bis 45 Gew.-% beträgt.

5. Metallic-Druckfarbe gemäß einem der Ansprüche 1 bis 4, **dadurch gekennzeichnet, dass** die Menge der teilweise lichtdurchlässigen Effektpigmente in der Druckfarbe 25 bis 45 Gew.-% beträgt.

6. Metallic-Druckfarbe gemäß einem der Ansprüche 1 bis 5, **dadurch gekennzeichnet, dass** es sich bei dem Lösemittel oder Lösemittelgemisch um Wasser oder ein überwiegend wässriges Lösemittelgemisch handelt.

7. Pastöse Metallic-Druckfarbe für den Offset- oder Buchdruck, mindestens umfassend ein Lösemittel oder Lösemittelgemisch, mindestens ein polymeres Bindemittel, mindestens zwei verschiedene Effektpigmente sowie optional weitere Zusatzstoffe, **dadurch gekennzeichnet, dass** es sich bei den Effektpigmenten um 10 bis 40 Gew.-% mindestens eines Metalleffektpigmentes sowie 8 bis 30 Gew.-% mindestens eines Perlglanzpigments, bestehend aus transparenten oder semitransparenten plättchenförmigen Substraten, ausgewählt aus der Gruppe bestehend aus Glimmer, synthetischem Glimmer, Talkum, Kaolin und Glas, die mit farblosen oder farbigen Metalloxiden beschichtet sind, und/oder eines teilweise lichtdurchlässigen Effektpigments auf Basis von Flüssigkristallen, handelt, mit der Maßgabe, dass die Gesamtmenge aller Effekpigmente in der Druckfarbe 18 bis 55 Gew.-% beträgt, wobei die Mengen jeweils auf die Summe aller Bestandteile der Druckfarbe bezogen sind.

8. Metallic-Druckfarbe gemäß einem der Ansprüche 1 bis 7, **dadurch gekennzeichnet, dass** es sich bei dem Metalleffektpigment um Silberpigmente auf Aluminiumbasis und/oder Goldpigmente auf Goldbronzebasis handelt.

9. Metallic-Druckfarbe gemäß einem der Ansprüche 1 bis 8, **dadurch gekennzeichnet, dass** die Druckfarbe noch weitere Farbmittel umfasst.

10. Metallic-Druckfarbe gemäß einem der Ansprüche 1 bis 9, **dadurch gekennzeichnet, dass** es sich um eine UV-härtende Farbe handelt.

11. Verwendung einer Metallic-Druckfarbe gemäß einem der Ansprüche 1 bis 10 zum Veredeln von bedruckten Substraten.

12. Verfahren zum Veredeln von Drucken, bei dem man eine Ein- oder Mehrfarbendruckmaschine einsetzt, welche mit einem zusätzlichen Druckwerk zum Druck mit Metallic-Farben ausgerüstet ist, mittels der Druckmaschine ein Substrat bedruckt und mittels des zusätzlichen Druckwerkes sowie einer Metallic-Druckfarbe gemäß einem der Ansprüche 1 bis 10 Metallic-Motive auf das bedruckte Substrat aufbringt.

13. Verfahren gemäß Anspruch 12, **dadurch gekennzeichnet, dass** man auf den veredelten Druck noch eine Schutzschicht aufbringt.

14. Verfahren gemäß Anspruch 12 oder 13, **dadurch gekennzeichnet, dass** es sich bei der Druckmaschine um eine Offset- oder Flexodruckmaschine handelt.

15. Verfahren gemäß Anspruch 14, **dadurch gekennzeichnet, dass** es sich bei dem zusätzlichen Druckwerk um ein Flexo- oder Tiefdruckwerk handelt.

16. Bedrucktes Substrat, erhältlich nach einem Verfahren gemäß einem der Ansprüche 12 bis 15.

## Claims

1. Liquid metallic printing ink for flexographic, gravure or screen printing, at least comprising a solvent or solvent mixture, at least one polymeric binder, at least two different effect pigments and optionally further additives, **characterized in that** the effect pigments comprise from 20 to 60% by weight of at least one metal effect pigment and from 20 to 60% by weight of at least one pearl lustre pigment consisting of transparent or semitransparent lamellar substrates selected from the group consisting of mica, synthetic mica, talc, kaolin and glass, which are coated with colourless or coloured metal oxides, and/or of a partly optically transparent effect pigment based on liquid crystals, with the proviso that the total amount of all effect pigments in the printing ink is from 40 to 80% by weight, the amounts in each case being based on the sum of all components of the printing ink.

2. Metallic printing ink according to Claim 1, **characterized in that** the total amount of all effect pigments in the printing ink is from 50 to 75% by weight.

3. Metallic printing ink according to Claim 1, **characterized in that** the total amount of all effect pigments in the printing ink is from 55 to 70% by weight.

4. Metallic printing ink according to any of Claims 1 to 3, **characterized in that** the amount of metal effect pigments in the printing ink is from 25 to 45% by weight.

5. Metallic printing ink according to any of Claims 1 to 4, **characterized in that** the amount of the partly optically transparent effect pigments in the printing ink is from 25 to 45% by weight.

6. Metallic printing ink according to any of Claims 1 to 5, **characterized in that** the solvent or solvent mixture is water or a predominantly aqueous solvent mixture.

7. Pasty metallic printing ink for offset or letterpress printing, at least comprising a solvent or solvent mixture, at least one polymeric binder, at least two different effect pigments and optionally further additives, **characterized in that** the effect pigments comprise from 10 to 40% by weight of at least one metal effect pigment and from 8 to 30% by weight of at least one pearl lustre pigment consisting of transparent or semitransparent lamellar substrates selected from the group consisting of mica, synthetic mica, talc, kaolin and glass, which are coated with colourless or coloured metal oxides, and/or of a partly optically transparent effect pigment based on liquid crystals, with the proviso that the total amount of all effect pigments in the printing ink is from 18 to 55% by weight, the amounts in each case being based on the sum of all components of the printing ink.

8. Metallic printing ink according to any of Claims 1 to 7, **characterized in that** the metal effect pigment is an aluminium-based silver pigment and/or a gold bronze-based gold pigment.

9. Metallic printing ink according to any of Claims 1 to 8, **characterized in that** the printing ink also comprises further colorants.

10. Metallic printing ink according to any of Claims 1 to 9, **characterized in that** it is a UV-curable ink.

11. Use of a metallic printing ink according to any of Claims 1 to 10 for finishing printed substrates.

12. Process for finishing prints, in which a one-colour or multicolour printing press which is equipped with an additional printing unit for printing with metallic inks is used, a substrate is printed on by means of the printing press and metallic motifs are applied to the printed substrate by means of the additional printing unit and of a metallic printing ink according to any of Claims 1 to 10.

13. Process according to claim 12, **characterized in that** a protective layer is also applied to the finished print.

14. Process according to Claim 12 or 13, **characterized in that** the printing press is an offset or flexographic printing press.

15. Process according to Claim 14, **characterized in that** the additional printing unit is a flexographic or gravure printing unit.

16. Printed substrate obtainable by a process according to any of Claims 12 to 15.

## Revendications

1. Encre d'imprimerie métallique liquide pour l'impression flexographique, l'héliogravure ou la sérigraphie, comportant au moins un solvant ou mélange de solvants, au moins un liant polymère, au moins deux pigments d'effet différents, ainsi que d'autres additifs optionnels, **caractérisée par le fait qu'**il s'agit, en ce qui concerne les pigments d'effet, de 20 à 60 % en poids d'au moins un pigment d'effet métallique, ainsi que 20 à 60 % en poids d'au moins un pigment de lustre nacré, consistant en des substrats lamellaires transparents ou semi-transparents, choisis dans le groupe consistant en mica, micas synthétiques, talc, kaolin et verre, qui sont revêtus avec des oxydes métalliques incolores ou colorés, et/ou d'un pigment d'effet partiellement transparent à la lumière, à base de cristaux liquides, avec pour condition que la quantité totale de tous les pigments d'effet dans l'encre d'imprimerie est de 40 à 80 % en poids, tandis que les quantités sont à chaque fois rapportées à la somme de tous les constituants de l'encre d'imprimerie.

2. Encre d'imprimerie métallique selon la revendication 1, **caractérisée par le fait que** la quantité totale de tous les pigments d'effet dans l'encre d'imprimerie est de 50 à 75 % en poids.

3. Encre d'imprimerie métallique selon la revendication 1, **caractérisée par le fait que** la quantité totale de tous les pigments d'effet dans l'encre d'imprimerie est de 55 à 70 % en poids.

4. Encre d'imprimerie métallique selon l'une des revendications 1 à 3, **caractérisée par le fait que** la quantité des pigments d'effet métalliques dans l'encre d'imprimerie est de 25 à 45 % en poids.

5. Encre d'imprimerie métallique selon l'une des revendications 1 à 4, **caractérisée par le fait que** la quantité des pigments d'effet partiellement transparents à la lumière dans l'encre d'imprimerie est de 25 à 45 % en poids.

6. Encre d'imprimerie métallique selon l'une des revendications 1 à 5, **caractérisée par le fait que**, en ce qui concerne le solvant ou mélange de solvants, il s'agit d'eau ou d'un mélange de solvants principalement aqueux.

7. Encre d'imprimerie métallique pâteuse pour l'impression offset ou la typographie, comportant au moins un solvant ou mélange de solvants, au moins un liant polymère, au moins deux pigments d'effet différents, ainsi que d'autres additifs optionnels, **caractérisée par le fait qu'**il s'agit, en ce qui concerne les pigments d'effet, de 10 à 40 % en poids d'au moins un pigment d'effet métallique, ainsi que 8 à 30 % en poids d'au moins un pigment de lustre nacré, consistant en des substrats lamellaires transparents ou semi-transparents, choisis dans le groupe consistant en mica, micas synthétiques, talc, kaolin et verre, qui sont revêtus avec des oxydes métalliques incolores ou colorés, et/ou d'un pigment d'effet partiellement transparent à la lumière, à base de cristaux liquides, avec pour condition que la quantité totale de tous les pigments d'effet dans l'encre d'imprimerie est de 18 à 55 % en poids, tandis que les quantités sont à chaque fois rapportées à la somme de tous les constituants de l'encre d'imprimerie.

8. Encre d'imprimerie métallique selon l'une des revendications 1 à 7, **caractérisée par le fait que**, en ce qui concerne le pigment d'effet métallique, il s'agit de pigments argentés à base d'aluminium et/ou de pigments dorés à base de bronze d'or.

9. Encre d'imprimerie métallique selon l'une des revendications 1 à 8, **caractérisée par le fait que** l'encre d'imprimerie comporte encore d'autres colorants.

10. Encre d'imprimerie métallique selon l'une des revendications 1 à 9, **caractérisée par le fait qu'**il s'agit d'une encre durcissant aux UV.

11. Utilisation d'une encre d'imprimerie métallique selon l'une des revendications 1 à 10 pour l'ennoblissement de substrats imprimés.

12. Procédé pour l'ennoblissement d'impressions, dans lequel on utilise une machine à imprimer à une couleur ou en plusieurs couleurs, qui est équipée d'un élément d'impression additionnel pour l'impression avec des couleurs métalliques, on imprime un substrat au moyen de la machine d'impression et on applique, au moyen de l'élément d'impression additionnel ainsi que d'une encre d'imprimerie métallique selon l'une des revendications 1 à 10, des motifs métalliques sur le substrat imprimé.

13. Procédé selon la revendication 12, **caractérisé par le fait qu'**on applique sur l'impression ennoblie encore une couche de protection.

14. Procédé selon la revendication 12 ou 13, **caractérisé par le fait que**, en ce qui concerne la machine à imprimer, il s'agit d'une machine pour impression offset ou d'une machine pour impression flexographique.

15. Procédé selon la revendication 14, **caractérisé par le fait que**, en ce qui concerne l'élément d'impression additionnel, il s'agit d'un élément d'impression offset ou d'un élément d'impression en héliogravure.

16. Substrat imprimé, pouvant être obtenu par un procédé selon l'une des revendications 12 à 15.
